# EUROPEAN PATENT SPECIFICATION

(11) **EP 3 688 744 B1**
(45) Date of publication and mention of the grant of the patent: **04.10.2023**
(21) Application number: 18782299.4
(22) Date of filing: 27.09.2018
(51) Int. Cl.: G09B 23/28, G09B 23/32, G09B 23/34

(54) **A TRAINING MANIKIN**
ÜBUNGSPUPPE
MANNEQUIN D'ENTRAÎNEMENT

(30) Priority: 29.09.2017 DK PA201770740
(43) Date of publication of application: 05.08.2020
(73) Proprietor: Ambu A/S, 2750 Ballerup (DK)
(72) Inventor: SACHS, Fabian, 35789 Essershausen (DE); KOCH, Jakob, 2800 Lyngby (DK)
(74) Representative: AWA Denmark A/S
(86) International application number: PCT/DK2018/050235
(87) International publication number: WO 2019/063053

(56) References cited:
- EP-B1- 1 623 403
- US-A- 5 458 516
- US-A- 5 628 633
- US-A1- 2010 291 522
- US-B1- 6 227 864

## Description

### Field of the invention

The present invention relates to a training manikin for practising cardiopulmonary resuscitation, said manikin being collapsible into a storage position and expandable into a training position.

### Background of the invention

Manikins for practising resuscitation, primarily via chest compressions and lung ventilations have been produced and marketed in an assortment of variations.

Various embodiments having a rigid body and a rigid head with features adapted for chest compression and lung inflation have been presented in the prior art.

An example of such a manikin is shown in WO 2014/046609 A1.

However, these rigid manikins are often expensive, difficult to assemble and large in size, resulting in cardiopulmonary resuscitation (CPR) group training sessions only having a single manikin for the entire groups because of both cost and storage reasons.

As a reaction thereto some of the previous variations have alternatively been designed with an inflatable body and a rigid head, the body being inflated by manually blowing air into the body, to create a manikin which is more simple in design and thus less expensive to produce.

Unfortunately, these manikins are cumbersome and time consuming for the user to get ready for use, depriving the teacher and the trainee of precious minutes of teaching and practicing resuscitation.

An example of such a manikin is shown in EP 1 623 403 B1.

Furthermore, if more than one trainee uses the same manikin, and thus the same valve to inflate the manikin with their mouths, there is a high risk of cross-contamination from one trainee to the next.

Lastly, since the amount of air that is filled into the manikin is trainee dependent, there is a risk of either under- or overfilling the manikin, resulting in an incorrect amount of inflation and thus an incorrect training experience when performing and training CPR on said manikin, since a different pressure results in a very different pumping sensation for the trainee.

It is thus sensible to manufacture a training manikin that is simple and quick to prepare to use, so that a trainee can easily train and re-train the CPR algorithm (comprising a ventilation part and a chest compression part). The training manikin also forms a good basis for re-training throughout the trainee's life, where a quick brush up of the CPR makes a big difference.

### Summary of the invention

An object of the invention and/or of the present disclosure may be seen as to provide a training manikin which avoids, solves or lessens one or more of the above mentioned drawbacks. In particular an object of the invention is to provide a training manikin which is quickly ready to use and takes up a minimal amount of storage space when not in use, whilst at the same time provides a high degree of functional correctness during the CPR training.

According to the invention, these and further objects may be met by a training manikin for practising cardiopulmonary resuscitation, said manikin being collapsible into a storage position and expandable into a training position, said manikin comprising an inflatable body portion substantially shaped as at least an upper part of a human body, the inflatable body portion being adapted to be filled with air or gas to obtain the training position and being adapted to releasably retain said air or gas to maintain the training position, wherein the body portion comprises an elastically compressible self-expandable foam so that the inflatable body portion is adapted to self-inflate from the storage position to the training position when air or gas is allowed to flow from outside of the inflatable body portion into the self-expandable foam via a vent element.

By having a manikin according to the invention it is possible to have a training manikin that is low cost and can be compacted into a small storage position. Since the manikin comprises few parts, it is furthermore easy to produce and assemble.

Additionally, it is with the manikin according to the invention possible to still obtain a realistic height of the chest portion of the manikin, so that the desired 5-6 cm chest compression can be made during the CPR training, whilst the manikin still takes up a small volume during storage in the storage position.

The self-expanding foam ensures a better and more realistic compression feeling and makes it easier and quicker for the trainer and trainee to prepare a training manikin for a training session.

In terms of the present disclosure, the term "self-expandable foam" is to be interpreted as meaning that the foam in itself is able to expand from a smaller size into a larger size. That is to say the self-expandable foam is an elastically compressible foam able to expand itself from a compressed state and to subsequently be elastically compressed into the compressed state again.

In terms of the present disclosure, the term "self-inflatable" is to be interpreted as meaning that the body portion may at least partly inflate without the need of manual assistance such as a person blowing air into the body portion, or manually use of a pump or any other mechanical element, as the self-expanding foam will facilitate the inflation.

The expansion and/or inflation may occur as a result of the foam previously being compressed into a smaller size, the foam being in a situation of under-pressure or any like situation, that will allow the foam to expand, preferably at least partly by itself without the need for manual assistance.

The expansion is onset or supported by a manual opening of a vent element. The expansion and/or inflation is supported by inflation of air or gas via the vent element.

In the terms of the present disclosure, the term "collapsible" is to be interpreted as meaning; able to be compressed into a smaller size.

In an embodiment the body portion comprises elastically compressible self-expandable foam.

In an embodiment the body portion may be made up substantially of elastically compressible self-expanding foam, preferably entirely of elastically compressible self-expandable foam.

It is to be understood, that the obtaining of the training position, from the storage position, will happen automatically due to the elastically compressible self-expanding foam, when the manikin is activated to do so.

The skilled person will understand, that this activation occurs due to a manual action by a user by opening a vent element or the like. Upon this activation the manikin will by itself automatically at least partly go into the training position.

In an embodiment the body portion comprises an exterior shell and the elastically compressible self-expandable foam is configured inside the shell of the inflatable body portion, so that the inflatable body portion self-inflate from the storage position to the training position when air or gas is allowed to flow from outside of the shell of the inflatable body portion into the interior of the inflatable body portion.

When the body portion is in the storage position, the resiliency of the elastically compressible self-expanding foam ensures that the body portion can be used to simulate cardiac massage.

Thus a training manikin which is uncomplicated to assemble, quick and easy to bring from the storage position to the training position, and vice versa, without the need for external devices or inflation by mouth, is provided.

The elastically compressible self-expandable foam ensures that the manikin is more stable (i.e. less wobbly), when the user exerts a compression force on the manikin, compared to previous design and hence ensures that the feeling of the chest compression during CPR training is more realistic.

In an embodiment the inflatable body portion is adapted to resiliently absorb a compression force exerted on said manikin during practise of chest compression on the chest portion.

The air or gas present in the inflatable body portion in the training position may be forced out of said body portion when the inflatable body is deformed by the compression force.

The body portion is able to absorb said compression force, preferably via the resiliency of the elastically compressible self-expandable foam, thus alleviating the need for additional means to ensure the correctness of the CPR training.

It is to be understood, that the body portion may be adapted to allow air or gas to flow into and out from itself. So that when the body portion is compressed, thus compressing the elastically compressible self-expandable foam, some of the air or gas present in the foam will be forced to flow out of the body portion. When the compression is released, air will automatically, due to the self-expanding nature of the foam, flow into the foam again and expand the body portion from the compressed state.

In the claimed invention the manikin comprises a vent element adapted for allowing inflow of air or gas into the body portion.

Additionally or alternatively the vent element is adapted for allowing outflow of air or gas into the body portion.

In an embodiment the vent element is adapted for outflow of air or gas out of the body portion during compression, and/or inflow of air or gas into the body portion during expansion of the foam.

In an embodiment the vent element is a valve.

In an embodiment the training manikin further comprises an additional vent element adapted for facilitating inflow and/or outflow of air or gas from the body portion.

Hereby the manikin is able to go from a storage position to a training position and vice versa more rapidly and easy, since the inflow/outflow will not be limited by the amount of air or gas that is able to enter/exit the inflatable body portion during alteration from one position to another.

In an embodiment the vent element comprises an open position for allowing air or gas to flow in or out of the body portion, and a closed position for preventing air or gas from flowing in or out of the body portion.

The air or gas is preferably substantially prevented, more preferred completely prevented from flowing into/out from the body portion, when the vent element is positioned in the closed position.

In an embodiment the additional vent element comprises an open position for allowing air or gas to flow in or out of the body portion, and a closed position for preventing air or gas from flowing in or out of the body portion.

This enables the provision of a completely air/gas closed system within the body portion, when the vent element is positioned in the closed position, thus not allowing air/gas to flow either in or out if said body portion.

When the body position is compressed/collapsed into the storage position, and the vent element is positioned in the closed position, an under pressure will be created within the body portion, which will assist in maintaining the manikin in the storage position.

When the vent element is altered from the closed position to the open positon, air/gas will flow into the body potion via the vent element. The under pressure that was present within the body portion will assist in the inflation of the elastically compressible self-expanding foam, so that at least a part of the manikin will automatically go from the storage position to the training position.

In an embodiment the vent element is arranged in connection to the body portion, so that when the vent element is arranged in the closed position, an interior space of the body portion defines a closed volume.

Thereby a manikin is provided which is easy and quick to bring from the storage position to the training position, and also is easy to maintain in the storage position, since the vent element may be easily closed off, creating underpressure within the body portion, which helps to maintain the collapsed storage position.

In an embodiment the body portion is at least partly covered by a flexible skin layer, which, in a condition of use, follows the shape of the body portion.

In an embodiment the body portion is substantially covered by the flexible skin layer.

In an embodiment the anterior side of the body portion is covered by the flexible skin layer, preferably both the anterior side and the circumference (i.e. the sides) of the body portion are covered by the flexible skin layer.

In an embodiment substantially the entire body portion is enclosed by a flexible layer.

The flexible skin layer ensures, that when the body portion is compressed/collapsed going from the training position to the storage position, then the flexible layer may follow and fold down together with the elastically compressible self-expandable foam.

In an embodiment the skin layer defines a closed inflatable volume.

In an embodiment the vent element is positioned in the flexible skin layer.

The skin layer allows for easy expansion and collapse of the torso part and also for flexible movement of the manikin during CPR training, thereby simulating the movement of the torso of a person during CPR.

The term "flexible" is to be understood as being flexible in any direction.

The flexible skin layer may also be positioned in a storage position and a training position. In the storage position the flexible skin layer is collapsed into a smaller size, so as to facilitate the smaller size of the manikin in the storage position. In the training position the flexible skin layer is unfolded/expanded, so as to bring the manikin into the training position.

Since the skin layer is flexible it allows for the movement (compression / expansion) of the manikin during CPR training.

In an embodiment the manikin further comprises a bottom cover element, which at least partly covers the body portion, when the manikin is arranged in the storage position.

In an embodiment the bottom cover element is arranged adjacent to and/or covers a posterior side, different from and opposite the anterior side, of the manikin.

In an embodiment the bottom cover element is releasably connected to the skin layer.

The bottom cover element may be releasably connected to the skin layer via an attachment element. The attachment element may be any suitable means such as a zipper, snap buttons, hook and loop fasteners, snap locks or the like.

In an embodiment the bottom cover element is fixated to the skin layer.

In an embodiment the bottom cover element preferably comprises a base plate and a side wall extending away from said base plate, preferably approximately perpendicular to said base plate, in the entire circumference of said base plate.

In an embodiment a part of the skin layer may be attached on an inner surface of the bottom cover element, preferably an inner surface of the side wall or preferably an inner surface of the bottom plate, so that when the manikin is positioned in the storage position, the skin layer is folded down, partly inside the bottom cover element.

The bottom cover element ensures both sturdy support during training, which gives a more realistic feeling during the CPR training and provides for easy collapse into the storage position, when the user is done with the training.

In one embodiment the vent element and/or the additional vent element is/are positioned in the bottom cover element.

In an embodiment the bottom cover element has a shape similar to the chest part of a human.

In an embodiment the bottom cover element has a shape so as to match the shape of the posterior side of the inflatable body portion, so that at least a part of the body portion may be arranged inside the bottom cover element.

In an embodiment the vent element is positioned in the skin layer and the additional vent element is positioned in the bottom cover element.

In an embodiment the flexible skin layer is connected to the entire inner circumference of the side wall of the bottom cover element.

The flexible skin layer may be integrally moulded with a part of the bottom cover element.

By providing the bottom cover element and the flexible skin layer, a simple torso outer part is provided, which is easy and cheap to produce, whilst allowing for easy collapse into the storage position and easy expansion into the training position.

In an embodiment the flexible skin layer comprises a skin layer side wall in the form of a bellows.

In an embodiment the bottom cover element is adapted to, preferably in combination with a force applied by the user to the chest part, bring the chest part from the training position to the storage position.

The force may be applied by the user to either the chest part directly or to the chest part via the folding of the bottom cover element to bring the chest part from the training position to the storage position.

The folding of the bottom cover element may force the air/gas present in the body portion to flow out of said body portion, so that the body portion collapses and is brought into the storage position.

The combination of the force applied by the trainee and/or the folding of the bottom cover element allows the torso part of the manikin to swiftly and easily be brought into the storage position where it takes up a minimal amount of storage space.

The bottom cover element may be attached to the itself via a bottom cover attachment element.

The bottom cover attachment element may be any suitable means such as a zipper, snap buttons, hook and loop fasteners, snap locks or the like.

Alternatively or additionally in the training manikin further comprises a top cover element, wherein the top cover is adapted to mate with the bottom cover when the body portion is collapsed/compressed into the storage position.

The top and bottom cover elements may be releasably attached to each other by any suitable attachment means.

Such an attachment means may be a zipper, snap buttons, hook and loop fasteners, snap locks or the like.

The top cover element ensures that the manikin is able to obtains the storage position in an easy and uncomplicated manner.

The top cover may be positioned on top of the body portion. The user may then exert a force onto the top cover element and thus the body portion so as to compress the body portion via the top cover element. When a required amount of force is exerted the body portion will be compressed enough to allow the top cover element to be releasably attached to the bottom cover element.

The releasably attachment between the top and bottom cover element may maintain the manikin in the storage position, so that when the attachment between the top and bottom cover elements is released, the body portion can expand, preferably at least partly automatically, into the training position.

If an under pressure is present within the body portion, then this may need to be released before the body portion can expand into the training position.

This may be done for example by opening of the vent element or as a result of the attachment between the top and bottom cover elements being released.

In an embodiment the skin layer and the bottom cover defines an open volume so that, in the condition of use, the interior of the body portion is in fluid communication with the exterior of the manikin.

The top cover element may in a manner similar to the foldable bottom cover element assist in bringing the torso part from the training position to the storage position.

A force may be applied by the user directly to the top cover element, and thereby indirectly there through to the body portion, to bring the torso part from the training position to the storage position.

Both the foldable bottom cover element attached to itself and the combination of the bottom cover element and the top cover element attached to each other are adapted to retain at least part of the manikin in the storage position, so that no external device and/or packaging is necessary to minimise and/or keep the torso part in the storage position.

In an embodiment at least a part of the top cover element is attached to a part of the bottom cover element both in the storage and in the training position.

This ensures that the top cover element will not be misplaced, when the manikin is unpacked.

In an embodiment the manikin further comprises a compression element arranged adjacent to the inflatable body portion.

The compression element may have any suitable shape, preferably in the shape of a plate/board.

The compression element may be attached to the inflatable body portion.

In an embodiment the manikin further comprises a lung element positioned adjacent to the compression element.

The lung element is preferably a lung bag, preferably arranged adjacent to or position directly on the compression element.

The lung element is arranged approximately parallel with the compression element.

In an embodiment the compression element is arranged between the lung element and the inflatable body portion.

The body portion may guide the lung element and the compression element, so that their movement is in a direction to and from the bottom cover element, preferably approximately parallel to said bottom cover element, both in a CPR training situation but also when the manikin is being brought to or from the storage position.

In an embodiment the elastically compressible self-expandable foam provides continuously increasing resistance as the compression element moves towards the bottom cover element.

Alternatively, the elastically compressible self-expandable foam provides stepwise increasing resistance as the compression element moves towards the bottom cover element.

When the elastically compressible self-expandable foam is in the storage position, the elastically compressible self-expandable foam may be in a compressed/tightened state. Likewise, when the elastically compressible self-expandable foam is in the training position, the elastically compressible self-expandable foam may be in a released and/or relaxed state.

When the manikin is in the storage position, the compression element and the bottom cover element may be arranged approximately parallel to each other with a distance d_storage between each other. When the manikin is in the training position, without any external force applied, the compression element and the bottom cover element are arranged approximately parallel to each other with a distance d_training between each other.

In an embodiment d_training is larger than d_storage.

Providing a lung element as a separate element allows movement of the flexible skin layer, when a user blows air is into the manikin, which movement is independent of the elements that provides for the compression training part of the manikin (e.g. the elastically compressible self-expandable foam, compression element etc.).

Thereby the expansion of the lung element and thus the elevation of the flexible skin layer will simulate the movement of a human chest during the ventilation part of the CPR training, where it may be crucial to blow air until it is visible that the chest rises.

Since the lung element is positioned between the flexible skin layer and the compression element, the lung element will easily influence the flexible skin layer and provide for movement of the same when the lung element is filled with air.

In an embodiment the lung element is attached to the compression element. The attachment may be done for example by means of an adhesive.

This ensures that the lung element is correctly positioned between the flexible skin layer and the compression element during use, so that the lung element can perform its intended function.

In an embodiment the inflatable body portion is substantially shaped as a chest portion and as a head portion. The body portion comprises, preferably is substantially made of, a elastically compressible self-expandable foam so that the inflatable body portion is adapted to self-inflate from the storage position to the training position when air or gas is allowed to flow from outside of the inflatable body portion into the elastically compressible self-expanding foam.

In an embodiment the body portion shaped as a chest portion and a head portion is substantially made of one piece of elastically compressible self-expandable foam.

In an embodiment the bottom cover element and/or the top cover element encloses the entire body portion when the manikin is in the storage position.

This ensures that the entire manikin is quick and easy to bring from a storage position to a training position without the need for external devices or inflation by mouth.

The head portion may also be collapsible, which ensures that the entire manikin may be brought into a smaller size when in the storage position.

In an embodiment the shape of the body portion in the condition of use is at least partly formed by the elastically compressible self-expandable foam.

Thus by providing a manikin according to the invention it is possible to have both a training manikin that is low cost and can be storage without taking up an unnecessary amount of space, whilst at the same time provide a manikin that is easy and safe to use by a plurality of users at the same time, since the bag and face piece which comes into contact with germs of the user during the CPR training, may easily be replaced before the next user starts their CPR training.

In an embodiment the training manikin according to the first aspect further comprises; a head cavity adapted to receive a replaceable expandable bag having an air inlet, which air inlet is in air-tight fluid communication with a face piece with an opening, the head cavity is in fluid communication with the cavity of the lung element via an air duct.

The head cavity is preferably arranged in the head portion.

In an embodiment the manikin further comprises a cavity in the chest portion of the inflatable body and/or a lung element, which is in fluid communication with a cavity in the head portion of the manikin so as to simulate lung ventilation when a user blows air in to the cavity in the head portion.

In an embodiment the cavity in the head portion and/or the cavity in the chest portion is formed in the elastically compressible self-expandable foam.

An embodiment not falling under the scope of the claims relates to a method for bringing a training manikin for practising cardiopulmonary resuscitation from a collapsed, storage position to an expanded, training position, the method comprising the steps of;
1) providing a torso part in a collapsed, storage position, the torso part comprising;
   - an inflatable body portion being adapted to be filled with air or gas to obtain the training position and being adapted to releasably retain said air or gas to maintain the training position, the body portion comprises an elastically compressible self-expandable foam so that the inflatable body portion is adapted to self-inflate from the storage position to the training position when air or gas is allowed to flow from outside of the inflatable body portion into the elastically compressible self-expanding foam,
   - a retaining member, preferably a foldable bottom cover element or a top cover and a bottom cover element, for retaining the manikin in the storage position,
2) releasing the manikin from the storage position,
   wherein when the retaining member is released from the storage position, the elastically compressible self-expandable foam is also released from the storage position, and the release of the self-expanding foam forces the manikin to obtain the training position.

### The drawings

The invention will now be described in detail based on non-limiting exemplary embodiments and with reference to the drawings, on which:
Fig. 1a shows a top view of an embodiment according to an embodiment of the invention.
Fig. 1b shows is a side view of an embodiment of the invention.
Fig. 2 shows another side view of an embodiment of the invention.
Fig. 3a shows a schematic cross-sectional view along line II of Fig. 1a.
Fig. 3b shows a detail of an embodiment of Fig. 3a.

### Description of detailed embodiments of the invention

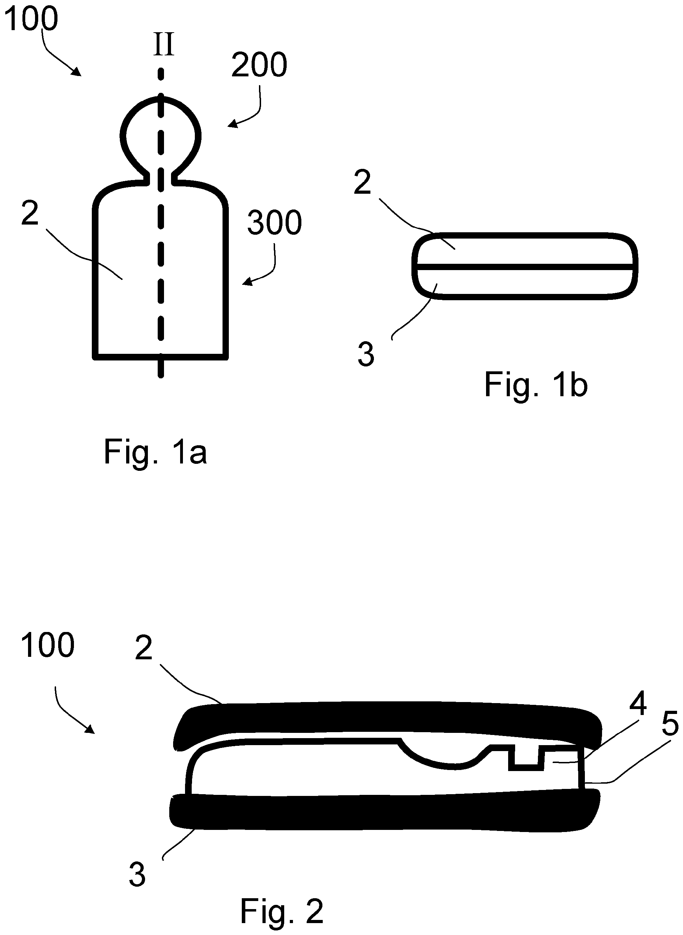

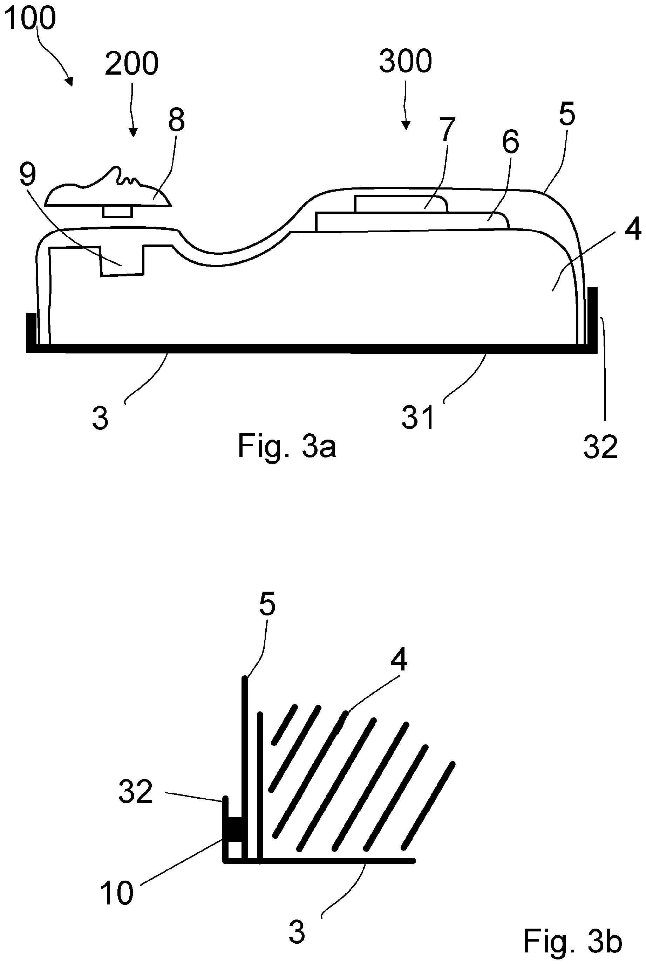

As seen on fig. 1a and fig. 3a an embodiment of the contemplated training manikin 100 has the shape of the upper part of a human. The manikin 100 comprises a head part 200 and a chest part 300.

The training manikin 100 is collapsible into a storage position, as illustrated on fig. 1b and expandable into a training position, as illustrated on fig. 3a.

The hatched line II indicates the cross section of the view shown in fig. 3a.

The manikin 100 comprises an inflatable body portion 4 substantially shaped as an upper part of a human body. In the embodiment shown on figs. 2 and 3a the inflatable body portion 4 is shaped as a chest portion and a head portion.

The inflatable body portion 4 is adapted to be filled with air or gas to obtain the training position and is adapted to releasably retain said air or gas to maintain the training position.

The inflatable body portion 4 is substantially made of an elastically compressible self-expandable foam. That is to say the self-expandable foam is an elastically compressible foam able to expand itself from a compressed state and to subsequently be elastically compressed into the compressed state again. Hereby the inflatable body portion 4 is adapted to self-inflate from the storage position to the training position when air or gas is allowed to flow from outside of the inflatable body portion 4 into the elastically compressible self-expanding foam.

The training manikin 100 further comprises a bottom cover element 3. In the embodiment shown on figs. 2 and 3 the inflatable body portion 4 is positioned on the bottom cover element 3, when the manikin 100 is in the training position. The inflatable body portion 4 may also be positioned on the bottom cover element 3, when the manikin 100 is in the storage position, wherein the foam of the body portion 4 may be compressed to a reduced height in order obtain a compressed/collapsed storage position.

As seen on figs. 1a and 1b the manikin 100 further comprises a top cover element 2. The top cover element 2 is adapted to mate with the bottom cover element 3 when the body portion is collapsed into the storage position.

The user of the training manikin 1 can exert a force (i.e. press) the body portion 4 with a hand to compress/collapse the foam and then attach the top cover element 2 to the bottom cover element 3 in order to keep the body portion 4 and the manikin 100 in the compressed/collapsed storage position as shown on fig. 1b.

Likewise, when the top cover element 2 is released from the bottom cover element 3, as illustrated on fig. 2, the foam will expand and the manikin will assume the training position.

Referring to fig. 3a, which shows a cross sectional side view of parts of the training manikin 100 shown in figure 1a, the anterior side and side walls of the body portion 4 are covered by a flexible skin layer 5.

The skin layer 5 may also cover the posterior side of the body portion 4, so that the entire body portion 4 is enclosed by the flexible skin layer 5.

The bottom cover element 3 comprises a base plate 31 and a side wall 32 extending away from said base plate, approximately perpendicular to said base plate, in the entire circumference of said base plate 31.

In the embodiment shown on fig. 3a, the skin layer 5 is attached to an inner surface of the side wall 32 of the bottom cover element 3.

The flexible skin layer 5 follows the shape of the body portion during use of the manikin 100.

It is to be understood that the volume enclosed by the skin layer 5 may in one embodiment be airtight and in another embodiment not be airtight. In the latter embodiment the air inside the body portion 4 will be pressed out of the interior volume defined by the skin along the edge where the skin and the bottom cover are connected, preferably releasably connected as illustrated on fig. 3b.

The releasable connection between the bottom cover element 3 and the skin layer 5 as shown on fig. 3b may be via an attachment element 10. The attachment element 10 may be any suitable means such as a zipper, snap buttons, hook and loop fasteners, snap locks or the like.

The attachment element 10 may be a two-part attachment element, wherein a first part of the attachment element 10 is attached to the inner side of the side wall 32 of the bottom cover element 3 and the second part is attached to on outer surface of the side wall of the flexible skin layer 5.

The manikin 100 further comprises a vent element (not shown) adapted for allowing inflow of air or gas into the body portion.

The vent element may be positioned at any suitable positon, preferably in connection with the skin layer 5.

The vent element may be positioned in an open position, where it allows air or gas to flow in or out of the body portion. The vent element may also be positioned in a closed position, where it prevents air or gas from flowing in or out of the body portion.

In an embodiment, similar as the embodiment shown on fig. 3a, the vent element is positioned in connection with the skin on the embodiment. The skin layer 5 and the bottom cover element 3 thus encloses a closed interior volume, where inflow and outflow of air/gas into or out from said interior volume, and thus the inflatable body portion 4, is controlled by the vent element.

When the vent element is arranged in the open position, air/gas will be able to flow both in through and out through said vent element.

During compression of the chest part 300 of the manikin during CPR training, the vent element is arranged in the open position so that both outflow of air or gas out of the body portion during compression, and inflow of air or gas into the body portion during expansion when the compression force is released is enabled.

When the vent element is positioned in the closed position, air or gas is prevented from flowing into the interior volume defined by the skin layer 5 and the bottom cover element 3 and thus into the body portion 4.

This enables the provision of a completely air/gas closed system within the interior volume, when the vent element is positioned in the closed position, thus not allowing air/gas to flow either in or out if said body portion 4.

When the body position 4 is compressed/collapsed into the storage position, and the vent element is positioned in the closed position, an under pressure will be created within the interior volume, which will assist in maintaining the body portion 4 and thus the manikin 100 in the storage position.

When the vent element is altered from the closed position to the open positon, air/gas will flow into the interior volume and thus into the body potion 4 via the vent element.

The under pressure that was present within the interior volume will assist in the inflation of the elastically compressible self-expanding foam so that the manikin 100 will at least partly automatically go from the storage position to the training position.

The manikin may comprise an additional vent element (not shown). The additional vent element may be positioned at any suitable position, for example in the base plate 31 of the bottom cover element 3.

The additional vent element is adapted for facilitating further inflow and/or outflow of air or gas into or put from the interior volume defined by the skin layer 5 and the bottom cover element 3.

The additional vent element may also be positioned in an open position for allowing air or gas to flow in or out of the body portion, and a closed position for preventing air or gas from flowing in or out of the body portion.

During CPR training the additional vent element will assist in air flowing out from the body portion 4 and thus the interior volume defined by the skin layer 5 and the bottom cover element 3, when the user provides a force to the chest part 300 of the manikin and the body portion 4 is compressed. When the force is removed by the user, air/gas can thus quickly flow into the interior volume through the additional vent element and thus facilitate the expansion of the body portion 4, so that the manikin again assumes the training position and a new force can then readily be applied by the user.

Further the vent element and/or the additional vent element may also assist in balancing the resistance of the chest part 300 during chest compression by defining how much air can flow out of the interior volume by the size and functionality of the vent element and/or additional vent element.

As shown on fig. 3a the manikin 100 further comprises a compression element 6, substantially in the form of a board, arranged adjacent to the inflatable body portion 4 in the chest part 300 of the manikin 100.

The manikin 100 also comprises an inflatable lung element 7 positioned adjacent to the compression element 6

In a preferred embodiment the body portion 4, the compression element 6 and the lung element 7 are covered by the skin layer 5 and the bottom cover element 3, which provides for a closed interior volume.

However, in the shown embodiment on fig. 3b. the skin encloses an open interior volume, which therefore is not airtight as the skin layer 5 is connected to the bottom cover element 3 by means of the attachment element 32. Hence, the interior volume enclosed/defined by the skin layer 5 and the bottom cover element 3 will in this embodiment at all times be in fluid communication with the ambient air along the edge between the bottom cover element and the skin layer.

In the embodiment shown on fig. 3a the head portion (arranged in the head part 200 of the manikin) of the body portion 4 comprises a head cavity 9.

The head part 200 of the manikin further comprises a face piece 8, which is formed to have a similar appearance as a human face, with a mouth and/or nose opening for a user to blow air into during a ventilation part of CPR training. The face piece 8 can be releasably attached as part of the head part 200 of the manikin 100.

The head cavity 9 is adapted to receive a replaceable expandable bag (not shown) having an air inlet. The air inlet may be in air-tight fluid communication with the mouth/nose opening of the face piece 8.

The head cavity 9 may be in fluid communication with an inside volume of the lung element 7 via an air duct (not shown), so that when a user during the ventilation part of the CPR training blows air into the mouth/nose opening of the face piece 8, the lung element will expand and thus provide elevation of the skin layer 5 covering said lung element 7, whereby the chest part 300 of the manikin 100 will simulate the movement of a human chest during the ventilation part of the CPR training.

## Claims

1. A training manikin (100) for practising cardiopulmonary resuscitation, said manikin (100) being collapsible into a storage position and expandable into a training position, said manikin (100) comprising
an inflatable body portion (4) substantially shaped as at least an upper part of a human body,
the inflatable body portion (4) being adapted to be filled with air or gas to obtain the training position and being adapted to releasably retain said air or gas to maintain the training position, **characterized in that**
the body portion (4) comprises an elastically compressible self-expandable foam so that the inflatable body portion (4) is adapted to self-inflate from the storage position to the training position when air or gas is allowed to flow from outside of the inflatable body portion (4) into the self-expandable foam via a vent element.

2. A training manikin (100) according to claim 1, wherein the inflatable body portion (4) is adapted to resiliently absorb a compression force exerted on said manikin (100) during practise of chest compression on the chest portion (300).

3. A training manikin (100) according to claim 1 or 2, wherein the vent element comprises an open position for allowing air or gas to flow in or out of the body portion (4), and a closed position for preventing air or gas from flowing in or out of the body portion (4).

4. A training manikin (100) according to any one of the previous claims, wherein the body portion (4) is at least partly covered by a flexible skin layer (5), which, in a condition of use, follows the shape of the body portion (4).

5. A training manikin (100) according to any one of the previous claims, wherein the manikin (100) further comprises a bottom cover element (3), which at least partly covers the body portion (4) when the manikin (100) is arranged in the storage position.

6. A training manikin (100) according to claim 5, further comprising a top cover element (2), wherein the top cover element (2) is adapted to mate with the bottom cover element (3) when the body portion (4) is collapsed into the storage position.

7. A training manikin (100) according to any one of the previous claims, wherein the manikin (100) further comprises a compression element (6) arranged adjacent to the inflatable body portion (4), and preferably comprises a lung element (7) positioned adjacent to the compression element.

8. A training manikin (100) according to claim 1 for practising cardiopulmonary resuscitation with artificial ventilation by the mouth-to-mouth or mouth-to-nose method, wherein the manikin (100) further comprises
a body portion (4) which, in a condition of use, substantially has the shape of at least a chest portion (300) and a head portion (200) of a human body, the body portion (4) being collapsible to a reduced volume to obtain a storage position,
the chest portion (300) comprising an expandable, preferably inflatable, cavity adapted to simulate lung ventilation,
the head portion (200) comprising a head cavity adapted to receive a replaceable expandable bag having an air inlet, which air inlet is in air-tight fluid communication with a face piece with an opening, the head cavity is in fluid communication with the cavity of the lung element via an air duct.

## Patentansprüche

1. Übungsmodell (100) zum Üben von kardiopulmonaler Reanimation, wobei das Modell (100) in eine Aufbewahrungsstellung kollabierbar und ein eine Übungsstellung expandierbar ist, wobei das Modell (100) umfasst:
einen aufblähbaren Körperteil (4), der im Wesentlichen wie wenigstens ein oberer Teil eines menschlichen Körpers geformt ist,
wobei der aufblähbare Körperteil (4) dafür ausgelegt ist, mit Luft oder Gas gefüllt zu werden, um die Übungsstellung zu erhalten, und dafür ausgelegt ist, die Luft oder das Gas freigebbar zu halten, um die Übungsstellung aufrechtzuhalten, **dadurch gekennzeichnet, dass**
der Körperteil (4) einen elastisch komprimierbaren, selbstexpandierbaren Schaumstoff enthält, so dass der aufblähbare Körperteil (4) dafür ausgelegt ist, sich aus der Aufbewahrungsstellung selbst in die Übungsstellung aufzublähen, wenn erlaubt wird, dass Luft oder Gas über ein Lüftungselement von außerhalb des aufblähbaren Körpers (4) in den selbstexpandierbaren Schaumstoff einströmt.

2. Übungsmodell (100) gemäß Anspruch 1, wobei der aufblähbare Körperteil (4) dafür ausgelegt ist, eine Kompressionskraft, die während des Übens von Thoraxkompression an dem Thoraxteil (300) auf das Übungsmodell (100) ausgeübt wird, elastisch aufzunehmen.

3. Übungsmodell (100) gemäß Anspruch 1 oder 2, wobei das Lüftungselement eine offene Stellung, die Strömen von Luft oder Gas in den oder aus dem Körperteil (4) erlaubt, und eine geschlossene Stellung, die Strömen von Luft oder Gas in den oder aus dem Körperteil (4) verhindert, umfasst.

4. Übungsmodell (100) gemäß einem der vorstehenden Ansprüche, wobei der Körperteil (4) wenigstens zum Teil von einer flexiblen Hautlage (5) bedeckt ist, die unter einer Verwendungsbedingung der Form des Körperteils (4) folgt.

5. Übungsmodell (100) gemäß einem der vorstehenden Ansprüche, wobei das Modell (100) ferner ein unteres Abdeckelement (3) umfasst, das den Körperteil (4) wenigstens zum Teil bedeckt, wenn das Modell (100) in der Aufbewahrungsstellung angeordnet ist.

6. Übungsmodell (100) gemäß Anspruch 5, ferner umfassend ein oberes Abdeckelement (2), wobei das obere Abdeckelement (2) dafür ausgelegt ist, mit dem unteren Abdeckelement (3) zusammenzupassen, wenn der Körperteil (4) in die Aufbewahrungsstellung kollabiert ist.

7. Übungsmodell (100) gemäß einem der vorstehenden Ansprüche, wobei das Modell (100) ferner ein Kompressionselement (6) umfasst, das benachbart zu dem aufblähbaren Körperteil (4) angeordnet ist und vorzugsweise ein Lungenelement (7), das benachbart zu dem Kompressionselement angeordnet ist, umfasst.

8. Übungsmodell (100) gemäß Anspruch 1 zum Üben von kardiopulmonaler Reanimation mit künstlicher Beatmung über das Mund-zu-Mund- oder Mund-zu-Nase-Verfahren, wobei das Modell (100) ferner umfasst:
einen Körperteil (4), der unter einer Verwendungsbedingung im Wesentlichen die Form wenigstens eines Thoraxteils (300) und eines Kopfteils (200) eines menschlichen Körpers aufweist, wobei der Körperteil (4) zu einem verringerten Volumen kollabierbar ist, um eine Aufbewahrungsstellung zu erhalten,
wobei der Thoraxteil (300) einen expandierbaren, vorzugsweise aufblähbaren, Hohlraum umfasst, der dafür ausgelegt ist, Lungenbeatmung nachzuahmen,
wobei der Kopfteil (200) einen Kopfhohlraum umfasst, der dafür ausgelegt ist, einen ersetzbaren expandierbaren Beutel mit einem Lufteinlass aufzunehmen, wobei der Lufteinlass in liftdichter Fluidverbindung mit einem Gesichtsstück mit einer Öffnung steht, wobei der Kopfhohlraum über einen Luftkanal in Fluidverbindung mit dem Hohlraum des Lungenelements steht.

## Revendications

1. Mannequin de formation (100) pour la pratique de la réanimation cardiopulmonaire, ledit mannequin (100) pouvant être replié dans une position de rangement et déplié dans une position de formation, ledit mannequin (100) comprenant
une partie corps gonflable (4) ayant sensiblement la forme d'au moins une partie supérieure d'un corps humain,
la partie corps gonflable (4) étant conçue pour être remplie d'air ou de gaz afin d'obtenir la position de formation et étant conçue pour retenir de manière libérable ledit air ou gaz afin de conserver la position de formation, **caractérisé en ce que**
la partie corps (4) comprend une mousse autoexpansible élastiquement compressible de sorte que la partie corps gonflable (4) soit conçue pour se gonfler automatiquement de la position de rangement à la position de formation lorsque de l'air ou du gaz est autorisé à s'écouler de l'extérieur de la partie corps gonflable (4) dans la mousse autoexpansible par le biais d'un élément de mise à l'air libre.

2. Mannequin de formation (100) selon la revendication 1, dans lequel la partie corps gonflable (4) est conçue pour absorber de manière élastique une force de compression exercée sur ledit mannequin (100) pendant une pratique de compression thoracique sur la partie thoracique (300).

3. Mannequin de formation (100) selon la revendication 1 ou 2, dans lequel l'élément de mise à l'air libre comprend une position ouverte pour permettre à l'air ou au gaz de s'écouler dans ou hors de la partie corps (4), et une position fermée pour empêcher l'air ou le gaz de s'écouler dans ou hors de la partie corps (4).

4. Mannequin de formation (100) selon l'une quelconque des revendications précédentes, dans lequel la partie corps (4) est au moins partiellement recouverte d'une couche de peau souple (5) qui, dans une condition d'utilisation, suit la forme de la partie corps (4).

5. Mannequin de formation (100) selon l'une quelconque des revendications précédentes, le mannequin (100) comprenant en outre un élément de recouvrement inférieur (3), qui recouvre au moins partiellement la partie corps (4) lorsque le mannequin (100) est agencé dans la position de rangement.

6. Mannequin de formation (100) selon la revendication 5, comprenant en outre un élément de recouvrement supérieur (2), dans lequel l'élément de recouvrement supérieur (2) est conçu pour s'accoupler avec l'élément de recouvrement inférieur (3) lorsque la partie corps (4) est repliée dans la position de rangement.

7. Mannequin de formation (100) selon l'une quelconque des revendications précédentes, le mannequin (100) comprenant en outre un élément de compression (6) agencé à côté de la partie corps gonflable (4), et comprenant de préférence un élément poumon (7) positionné à côté de l'élément de compression.

8. Mannequin de formation (100) selon la revendication 1 pour la pratique de la réanimation cardiopulmonaire avec ventilation artificielle par le procédé du bouche-à-bouche ou du bouche-à-nez, le mannequin (100) comprenant en outre
une partie corps (4) qui, dans une condition d'utilisation, a sensiblement la forme d'au moins une partie thoracique (300) et une partie tête (200) d'un corps humain, la partie corps (4) pouvant être repliée vers un volume réduit pour obtenir une position de rangement,
la partie thoracique (300) comprenant une cavité dépliable, de préférence gonflable, conçue pour simuler la ventilation pulmonaire,
la partie tête (200) comprenant une cavité conçue pour recevoir une poche dépliable remplaçable comportant une entrée d'air, laquelle entrée d'air est en communication fluidique étanche avec une pièce faciale comportant une ouverture, la cavité de tête étant en communication fluidique avec la cavité de l'élément poumon par le biais d'une conduite d'air.
